# FASCICULE DE BREVET EUROPEEN

(11) **EP 1 299 732 B1**
(45) Date de publication et mention de la délivrance du brevet: **26.04.2017**
(21) Numéro de dépôt: 01949809.6
(22) Date de dépôt: 04.07.2001
(51) Int. Cl.: G01P 13/00, E06B 9/82, E04F 10/06, H04B 1/16

(54) **DISPOSITIF DE DETECTION DE MOUVEMENT ET DISPOSITIF DE SECURITE POUR STORE A BRAS**
BEWEGUNGSMELDER UND SICHERHEITSEINRICHTUNG FÜR GELENKARMMARKISE
MOVEMENT DETECTING DEVICE AND SAFETY DEVICE FOR AWNING WITH ARTICULATED ARMS

(30) Priorité: 07.07.2000 FR 0008932
(43) Date de publication de la demande: 09.04.2003
(73) Titulaire: Somfy SAS, 74300 Cluses (FR)
(72) Inventeur: ORSAT, Jean-Michel, F-74300 Châtillon-sur-Cluses (FR)
(74) Mandataire: Bugnion Genève
(86) Numéro de dépôt international: PCT/IB2001/001193
(87) Numéro de publication internationale: WO 2002/004960

(56) Documents cités:
- EP-A- 0 771 929
- DE-A- 4 407 342
- DE-U- 20 000 682
- JP-A- 10 177 032

## Description

L'invention se rapporte à un dispositif de détection de mouvement, en particulier du vent, comprenant un capteur fournissant un signal lors de la détection et des moyens de traitement pour transformer le signal détecté en un signal de commande.

L'invention concerne également un dispositif de sécurité contre les effets du vent pour store à bras, ledit store comprenant un support portant un axe d'enroulement, une barre d'extrémité, des bras reliant le support et la barre de manière articulée, une toile fixée d'un côté à l'axe et de l'autre côté à la barre de manière à permettre son enroulement sur l'axe ou son déroulement depuis l'axe par des moyens d'actionnement et des moyens de détection dont le signal détecté permet de commander un déplacement de la toile au travers des moyens d'actionnement après comparaison avec une consigne

Finalement, l'invention concerne un procédé de commande pour un tel dispositif de sécurité.

Des dispositifs de sécurité pour store à bras sont connus dans l'état de la technique.

Un premier système est décrit dans le modèle d'utilité DE 200 00 682. Dans ce système, les moyens de détection sont placés à l'extrémité du store. Néanmoins, ce dispositif présente des inconvénients: en effet, comme la partie capteur est éloignée de la commande du store et que, pour simplifier, on utilise un système d'émetteur et de récepteur au lieu de câbles, la partie capteur doit émettre de manière aussi brève que possible pour économiser sa propre source d'énergie. Selon ce modèle d'utilité, il est prévu d'utiliser le récepteur de la commande pour envoyer un signal de quittance à l'émetteur du capteur et de cette manière arrêter l'émission du signal. Dans cette solution, l'émetteur doit non seulement être capable d'émettre un signal de commande, mais aussi de recevoir un signal de commande et de l'exécuter.

Cette solution complique néanmoins le système connu et le rend aussi plus cher à produire.

La publication DE 44 07 342, décrit un autre système dans lequel la tension exercée par le vent sur la toile est transmise à un capteur solidaire de l'axe d'enroulement du store. Dans ce système, le capteur est placé à côté de la commande du store de sorte que les problèmes de transmission d'information et d'alimentation du capteur ne se posent pas.

Un troisième système est décrit dans la publication EP 0 771 929. Ce document a pour objet une installation de commande d'un élément de protection solaire comprenant un capteur équipé d'un anémomètre entraînant une dynamo fournissant un courant représentatif de la force du vent et un radio-émetteur. Il est prévu d'utiliser une partie du courant fourni par la dynamo pour l'alimentation du capteur. Au capteur sont associés des moyens de traitement des information fournies par les capteurs de telle sorte que l'émetteur n'a pas besoin de transmettre continuellement des données brutes des sondes.

Le but de l'invention est d'améliorer les dispositifs connus en remédiant aux inconvénients de l'art antérieur.

Le dispositif de détection selon l'invention est défini par la revendication 1.

L'un des avantages du système selon l'invention est sa grande simplicité par rapport au systèmes existants. De plus, comme c'est le signal fourni par le détecteur qui agit comme signal de réveil pour le dispositif, les pertes d'énergie sont minimalisées: seule une détection effective de mouvement par le capteur entraîne l'activation des moyens de traitement. Finalement, on diminue ainsi le nombre d'éléments nécessaire au fonctionnement du dispositif.

Selon un premier mode d'exécution, le capteur comprend un accéléromètre susceptible de produire un signal électrique sous l'effet de vibrations.

Selon une première variante, le capteur est un capteur piézo-électrique avec une membrane en polymère maintenue dans un cadre et comportant une masse inertielle, placée de préférence sensiblement en son centre.

Selon une autre variante, le capteur est un capteur électromagnétique avec une masselotte aimantée mobile dans un solénoide.

Selon un autre mode d'exécution, le dispositif comprend une temporisation pour couper l'alimentation des moyens de traitement après un temps déterminé.

Le dispositif de sécurité contre les effets du vent est caractérisé en ce que lesdits moyens de détection sont formés par un dispositif de détection selon l'invention.

Selon un premier mode d'exécution du dispositif de sécurité, les moyens de détection sont placés sur la barre d'extrémité du store.

Le circuit d'analyse et de commande peut comprendre au moins un convertisseur et une unité logique de traitement comparant le signal détecté avec une consigne et commandant le déplacement de la toile en fonction du résultat de la comparaison en transmettant un ordre aux moyens d'actionnement.

Un émetteur est de préférence associé au circuit d'analyse et de commande pour envoyer l'ordre de commande du déplacement de la toile, et, de manière correspondante, un récepteur est associé aux moyens d'actionnement pour recevoir l'ordre émis par l'émetteur.

Le procédé de commande selon l'invention est défini par la revendication 10.

Le signal et la consigne correspondent à des valeurs d'intensité et/ou de fréquence.

Selon une variante particulière, l'on peut couper l'alimentation des moyens de détection après la commande de la remontée de la toile.

Selon une autre variante particulière, l'on coupe l'alimentation des moyens de détection si aucun déplacement n'est détecté pendant un temps prédéterminé.

L'invention sera mieux comprise par la description d'un mode d'exécution de celle-ci et des figures qui s'y rapportent.
La figure 1 représente un schéma général d'un dispositif de sécurité selon l'invention.
La figure 2 représente un mode d'exécution d'un capteur avec une membrane piézo-électrique.
La figure 3 représente un mode de réalisation d'un circuit utilisé comme moyen de traitement dans le dispositif de détection du mouvement.
La figure 4 représente un mode d'exécution d'un circuit de mise en forme.
La figure 5 représente un circuit d'analyse et de commande.
La figure 6 représente un schéma-bloc illustrant le procédé de commande du dispositif de sécurité selon l'invention

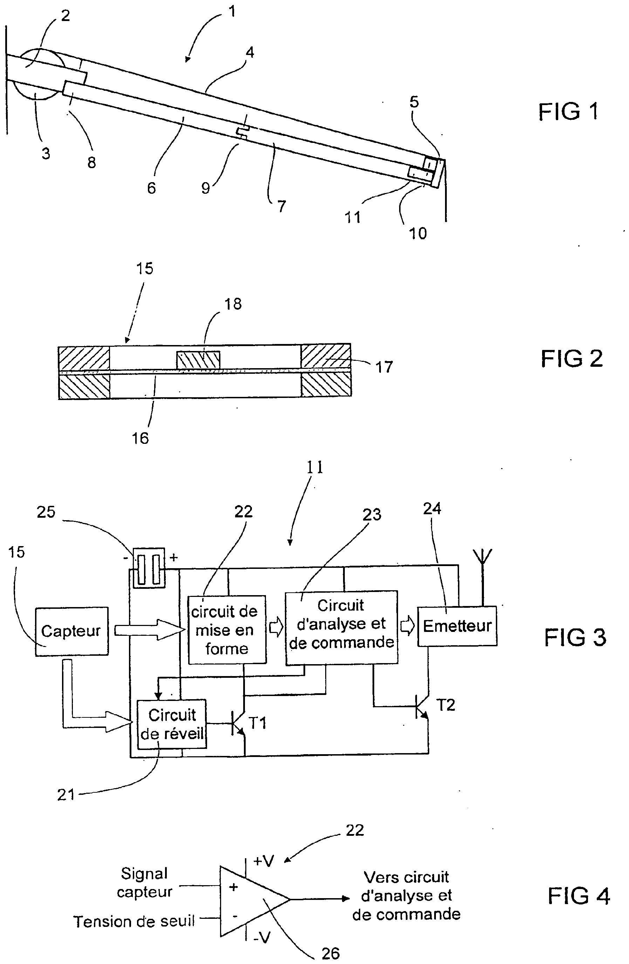

Selon la figure 1, le dispositif de sécurité du store à bras 1 comprend un support 2, monté sur un point fixe comme par exemple une paroi de maison (non-représentée), ledit support 2 portant, d'une part, un tube d'enroulement 3 entraîné par un moteur (non-représenté) sur lequel une toile vient s'enrouler, une barre d'extrémité 5 qui est reliée au support 2 par l'intermédiaire de bras articulés.

Les bras articulés comprennent deux segments 6, 7, le premier segment 6 étant fixé à l'une de ses extrémités au support 2 par l'intermédiaire d'un premier axe 8, et à l'autre de ses extrémités à l'une des extrémités du deuxième segment 7 par l'intermédiaire d'un second axe 9. L'autre extrémité du second segment 7 est quant à elle reliée à la barre d'extrémité 5 par l'intermédiaire d'un troisième axe 10.

La toile 4 est fixée d'un côté au tube d'enroulement 3 et de l'autre côté à la barre d'extrémité 5 de manière à permettre son enroulement sur le tube d'enroulement 3 ou son déroulement depuis ledit tube 3 par des moyens d'actionnement, comme par exemple un moteur. Dans la figure 1, la toile 4 est représentée dans un état déroulé.

Le dispositif de sécurité comprend en outre un dispositif de détection 11 qui est placé sur la barre d'extrémité 5. Ce dispositif de détection permet une détection directe des vibrations qui se produisent effectivement au niveau de la barre 5, notamment sous l'influence du vent. Cet endroit est particulièrement avantageux en raison de son exposition: dans le cas d'un store déroulé, c'est à cet endroit que les déplacements dus à l'influence du vent seront les plus important, en raison du porte-à-faux créé par un store partiellement ou complètement déroulé. Ainsi, la valeur mesurée à cet endroit permet de commander de manière appropriée l'enroulement de la toile 4, notamment si la force du vent dépasse une valeur prédéterminée.

Un mode d'exécution du dispositif de détection selon l'invention est décrit en référence aux figures 2 et 3. Dans ce mode d'exécution, le dispositif de détection est formé par un capteur 15 du type accéléromètre et susceptible de produire une énergie électrique sous l'effet de vibrations. Dans le mode d'exécution représenté à la figure 2, le capteur 15 utilise un principe piézo-électrique et comprend une membrane polymère 16, telle que celle fabriquée par la société Piézo Tech, maintenue dans un cadre 17 et supportant une masse inertielle 18. De préférence, la masse inertielle 18 est placée au centre de la membrane 16. Ainsi, lors de la présence de vibrations sur la barre 5, cette masse inertielle 18 déforme la membrane polymère piézo-électrique 16, générant de ce fait une variation de potentiel électrique proportionnelle qui peut être utilisée à la fois pour réveiller le dispositif de détection du mouvement et pour déterminer la commande à exécuter au niveau du tube d'enroulement.

Selon une autre variante, on peut utiliser un capteur fonctionnant selon un principe électromagnétique, comprenant par exemple une masselotte aimantée qui est mobile dans un solénoïde qui permet également de générer un signal électrique lorsque ce capteur est soumis à des vibrations.

Un mode d'exécution du dispositif de détection du mouvement est représenté à titre d'exemple à la figure 3.

Le signal électrique émis par le capteur 15 a deux fonctions comme indiqué ci-dessus. D'une part, il est utilisé pour actionner un circuit de réveil 21 au travers, par exemple, d'un trigger constitué par le transistor T1. Lorsqu'un signal électrique est généré par le capteur 15, c'est-à-dire dès que la barre 5 est soumise à une vibration par exemple sous l'effet du vent, le transistor T1 conduit et met en tension le circuit de mise en forme 22 et le circuit d'analyse et de commande 23 par activation de la pile 25. Le signal électrique généré par le capteur 15 est alors également utilisé dans les circuits de mise en forme 22 et d'analyse et de commande 23 mentionnés ci-dessus pour déterminer la commande effective du store. La valeur du signal émis par le capteur 15 est comparée avec une consigne de référence prédéterminée et, en fonction du résultat de cette comparaison, une commande est décidée dans le circuit d'analyse et de commande 23. Cette commande est alors transmise à l'émetteur 24 pour être envoyée à un récepteur (non-représenté) correspondant qui se trouve, par exemple, au niveau du tube d'enroulement 3. Ce récepteur commande ensuite de manière appropriée: par exemple un enroulement du store si la force du vent détectée dépasse la valeur de consigne prédéterminée. L'émetteur 24 et le récepteur utilisés sont des moyens connus de l'homme du métier et classiques dans l'état de la technique pour commander à distance un enroulement ou un déroulement de store.

Un mode d'exécution du circuit de mise en forme 22 est représenté à la figure 4. Ce circuit 22 comprend un comparateur 26 qui conditionne la tension signal du capteur 15 entre des tensions extrêmes -V et +V, tout en gardant l'information concernant la fréquence du signal détecté. Il permet de transformer l'énergie détectée en un signal représentatif de la force du vent qui soit exploitable par le circuit d'analyse et de commande 23.

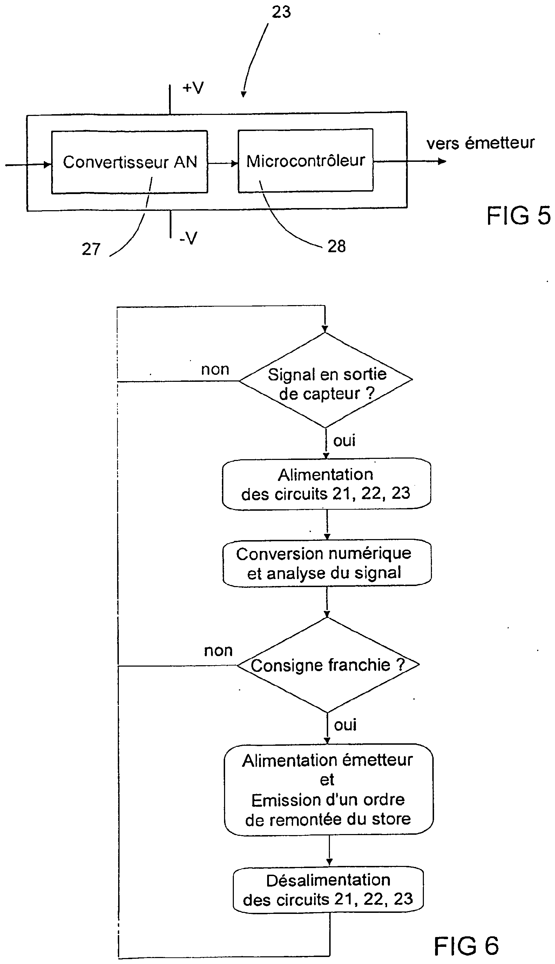

Le signal issu de ce circuit 22 est ensuite transmis au circuit d'analyse et de commande 23, comme représenté à la figure 3. Un mode d'exécution de ce circuit 23 est schématiquement représenté à la figure 5. Le signal issu du circuit 22 est tout d'abord transformé par un convertisseur analogique/numérique 27 et est introduit dans un microcontrôleur 28, comme par exemple une unité logique de traitement (ULT), connue en soi dans l'état de la technique. Ce microcontrôleur 28 contient en mémoire au moins une consigne prédéterminée et comprend une unité arithmétique et logique qui effectue la comparaison entre le signal reçu du convertisseur et la consigne prédéterminée mémorisée. En cas de dépassement de la consigne, le circuit 23 commande le transistor T2 (voir figure 3) qui assure l'alimentation de l'émetteur 24. Celui-ci émet alors un ordre de remontée de la toile 4 du store. Un fois que l'ordre de remontée a été émis, le circuit 23 peut émettre une autre commande en direction du circuit de réveil 21 pour suspendre la commande du transistor T1 et de ce fait couper l'alimentation du dispositif de détection 11.

Le schéma-bloc de la figure 6 illustre un procédé de commande pour un dispositif de sécurité selon l'invention.

Tant qu'aucun signal n'est détecté en sortie du capteur 15 ("Signal en sortie de capteur ?"), rien ne se passe et le circuit 20 n'est pas alimenté. Dès qu'un signal est émis par le capteur 15, les circuits 21, 22 et 23 sont alimentés ("Alimentation des circuits 21,22,23"). L'étape suivante comporte la mise en forme et la conversion du signal en un signal utilisable pour la comparaison avec la consigne ("Conversion numérique et analyse du signal") dans le microcontrôleur et ladite comparaison ("Consigne franchie ?"). Si la comparaison résulte dans un dépassement de la consigne mémorisée ("Consigne franchie = oui"), l'émetteur 24 est alimenté et une commande de remontée de la toile 4 du store est envoyée ("Alimentation émetteur et Emission d'un ordre de remontée du store"). L'alimentation des circuits 21, 22 et 23 est ensuite coupée ("Désalimentation des circuits 21, 22, 23") et le circuit se remet en mode d'attente de la détection d'un signal.

Si, en revanche, la consigne n'est pas dépassée ("Consigne franchie = non"), le circuit reste en boucle et continue de mesurer le signal reçu du capteur 15 et de le comparer avec la consigne mémorisée dans le circuit d'analyse et de commande 23. Pour cette situation, on peut éventuellement prévoir une temporisation qui coupe l'alimentation des circuits 21, 22, et 23 si aucune valeur n'est plus détectée en sortie du capteur 15 après un certain temps, dans le cas par exemple d'un faible coup de vent dont la valeur effectivement détectée est inférieure à la consigne. Cette temporisation peut être intégrée dans le circuit de réveil 21.

Les modes d'exécution de l'invention sont décrits à titre d'exemple et des variations dans le cadre de la protection revendiquée sont possible. Par exemple, la consigne mémorisée peut non seulement être une valeur d'intensité mais aussi concerner la fréquence. Ainsi, on pourrait utiliser non seulement la valeur d'intensité du vent détectée mais aussi la fréquence de la vibration générée sur la barre d'extrémité 5 pour commander une remontée de la toile 4 du store.

D'autres moyens équivalents à ceux revendiqués sont également envisageables. Par exemple, comme moyen de détection, on peut utiliser un système optique, dont une partie est fixée à la barre d'extrémité du store et une autre partie est montée sur un point fixe, par exemple le mur portant le store. De cette manière, il est également possible de détecter les mouvements effectifs de la barre d'extrémité et de commander de manière appropriée la remontée du store si les mouvements de la barre sont trop importants et dépassent une consigne prédéterminée.

Les moyens de transmission entre émetteur 24 et récepteur peuvent être de différente nature. On peut utiliser des ondes radio, ou d'autres moyens équivalents comme des moyens optiques ou acoustiques.

## Revendications

1. Dispositif de détection de mouvement dû à l'influence du vent comprenant un capteur (15) fournissant un premier signal lors de la détection et des moyens de traitement (21, 22, 23, 25) pour transformer le premier signal détecté en un signal de commande, **caractérisé en ce que** le premier signal fourni par le capteur (15) est utilisé comme signal de réveil pour les moyens de traitement (21,22,23,25) et **en ce que** les moyens de traitement comprennent au moins un circuit de réveil (21), un circuit de mise en forme (22) du signal détecté, un circuit d'analyse et de commande (23) relié audit circuit de mise en forme (22) et des moyens d'alimentation (25), le signal détecté étant fourni au circuit de réveil (21) et au circuit de mise en forme (22).

2. Dispositif selon la revendication 1, **caractérisé en ce que** le capteur (15) comprend un accéléromètre susceptible de produire un signal électrique sous l'effet de vibrations.

3. Dispositif selon la revendication 2, **caractérisé en ce que** le capteur (15) est un capteur piézo-électrique avec une membrane en polymère (16) maintenue dans un cadre (17) et comportant une masse inertielle (18).

4. Dispositif selon la revendication 2, **caractérisé en ce que** le capteur est un capteur électromagnétique avec une masselotte aimantée mobile dans un solénoïde.

5. Dispositif selon l'une des revendications précédentes, **caractérisé en ce qu'**il comprend une temporisation pour couper l'alimentation des moyens de traitement après un temps déterminé.

6. Dispositif de sécurité contre les effets du vent pour store à bras (1), ledit store (1) comprenant un support (2) portant un axe d'enroulement (3), une barre d'extrémité (5), des bras (6,7) reliant le support (2) et la barre (5) de manière articulée, une toile (4) fixée d'un côté à l'axe (3) et de l'autre côté à la barre (5) de manière à permettre son enroulement sur l'axe (3) ou son déroulement depuis l'axe (3) par des moyens d'actionnement et des moyens de détection (11) dont le signal détecté permet de commander un déplacement de la toile (4) au travers des moyens d'actionnement après comparaison avec une consigne **caractérisé en ce que** lesdits moyens de détection (11) sont formés par un dispositif de détection selon l'une des revendications précédentes.

7. Dispositif de sécurité selon la revendication 6 **caractérisé en ce que** lesdits moyens de détection (11) sont placés sur la barre d'extrémité (4) du store.

8. Dispositif de sécurité selon la revendication 6 ou 7, **caractérisé en ce que** le circuit d'analyse et de commande (23) comprend au moins un convertisseur et une unité Logique de traitement (ULT, 28) comparant le signal détecté avec une consigne et commandant le déplacement de la toile (4) en fonction du résultat de la comparaison en transmettant un ordre aux moyens d'actionnement.

9. Dispositif de sécurité selon l'une des revendications précédentes, **caractérisé en ce qu'**un émetteur (24) est associé au circuit d'analyse et de commande pour envoyer l'ordre de commande du déplacement de la toile (4), et un récepteur est associé aux moyens d'actionnement pour recevoir l'ordre émis par l'émetteur (24).

10. Procédé de commande pour dispositif de sécurité contre les effets du vent d'un store à bras comprenant au moins un support portant un axe d'enroulement, une barre d'extrémité, des bras reliant le support et la barre de manière articulée, une toile fixée d'un côté à l'axe et de l'autre côté à la barre de manière à permettre son enroulement sur l'axe ou son déroulement depuis l'axe par des moyens d'actionnement et des moyens de détection des effets du vent sur le store placés sur la barre d'extrémité, les moyens de détection comprenant un capteur (15) et des moyens de traitement (21, 22, 23, 25), le procédé comportant les étapes suivantes :
a) on détecte un déplacement de la barre;
b) on transforme le déplacement détecté en un signal;
c) on enclenche l'alimentation des moyens de détection au moyen dudit signal;
d) on compare ledit signal avec une consigne;
e) on commande la remontée de la toile du store en fonction du résultat de la comparaison dudit signal avec la consigne,
les moyens de détection comprenant au moins un circuit de réveil (21), un circuit de mise en forme (22) du signal détecté, un circuit d'analyse et de commande (23) relié audit circuit de mise en forme (22) et des moyens d'alimentation (25), le signal détecté étant fourni au circuit de réveil (21) et au circuit de mise en forme (22).

11. Procédé selon la revendication 10, **caractérisé en ce que** ledit signal et ladite consigne correspondent à des valeurs d'intensité et/ou de fréquence.

12. Procédé selon l'une des revendications 10 ou 11, **caractérisé en ce que** l'on coupe l'alimentation des moyens de détection après la commande de la remontée de la toile.

13. Procédé selon l'une des revendications 10 à 12, **caractérisé en ce que** l'on coupe l'alimentation des moyens de détection si aucun déplacement n'est détecté pendant un temps prédéterminé.

## Patentansprüche

1. Vorrichtung zum Erkennen einer durch Windeinfluss verursachten Bewegung, umfassend einen Sensor (15), der bei der Erkennung ein erstes Signal bereitstellt, und Verarbeitungsmittel (21, 22, 23, 25), um das erste erkannte Signal in ein Steuerungssignal umzuwandeln, **dadurch gekennzeichnet, dass** das erste Signal, das von dem Sensor (15) bereitgestellt wird, als Wecksignal für die Verarbeitungsmittel (21, 22, 23, 25) verwendet wird, und dass die Verarbeitungsmittel mindestens eine Weckschaltung (21), eine Schaltung (22) zum Aufbereiten des erkannten Signals, eine Analyse- und Steuerungsschaltung (23), die mit der Aufbereitungsschaltung (22) verbunden ist, und Stromversorgungsmittel (25) umfassen, wobei das erkannte Signal der Weckschaltung (21) und der Aufbereitungsschaltung (22) bereitgestellt wird.

2. Vorrichtung nach Anspruch 1, **dadurch gekennzeichnet, dass** der Sensor (15) einen Beschleunigungsmesser umfasst, der unter der Einwirkung von Schwingungen ein elektrisches Signal erzeugen kann.

3. Vorrichtung nach Anspruch 2, **dadurch gekennzeichnet, dass** der Sensor (15) ein piezoelektrischer Sensor mit einer Polymermembrane (16) ist, die in einem Rahmen (17) gehalten wird und eine träge Masse (18) umfasst.

4. Vorrichtung nach Anspruch 2, **dadurch gekennzeichnet, dass** der Sensor ein elektromagnetischer Sensor mit einem in einem Elektromagneten beweglichen magnetischen Ausgleichgewicht ist.

5. Vorrichtung nach einem der vorhergehenden Ansprüche, **dadurch gekennzeichnet, dass** sie eine Verzögerung umfasst, um die Stromversorgung der Verarbeitungsmittel nach einer bestimmten Zeit abzuschalten.

6. Sicherheitsvorrichtung gegen die Auswirkungen des Windes für eine Gelenkarm-Markise (1), wobei die Markise (1) einen Träger (2), der eine Wickelachse (3) trägt, eine Endstange (5), Arme (6, 7), die den Träger (2) und die Stange (5) gelenkig verbinden, ein Tuch (4), das auf einer Seite an der Achse (3) und auf der anderen Seite an der Stange (5) befestigt ist, um sein Aufrollen um die Achse (3) oder sein Abrollen von der Achse (3) durch Betätigungsmittel zu ermöglichen, und Erkennungsmittel (11), deren erkanntes Signal nach einem Vergleich mit einem Sollwert eine Steuerung einer Verlagerung des Tuchs (4) anhand der Betätigungsmittel ermöglicht, umfasst, **dadurch gekennzeichnet, dass** die Erkennungsmittel (11) aus einer Erkennungsvorrichtung nach einem der vorhergehenden Ansprüche besteht.

7. Sicherheitsvorrichtung nach Anspruch 6, **dadurch gekennzeichnet, dass** die Erkennungsmittel (11) auf der Endstange (4) der Markise angeordnet sind.

8. Sicherheitsvorrichtung nach Anspruch 6 oder 7, **dadurch gekennzeichnet, dass** die Analyse- und Steuerungsschaltung (23) mindestens einen Wandler und eine Verarbeitungslogikeinheit (ULT, 28) umfasst, die das erkannte Signal mit einem Sollwert vergleicht und die Verlagerung des Tuchs (4) je nach dem Ergebnis des Vergleichs steuert, indem sie einen Befehl an die Betätigungsmittel überträgt.

9. Sicherheitsvorrichtung nach einem der vorhergehenden Ansprüche, **dadurch gekennzeichnet, dass** ein Sender (24) mit der Analyse- und Steuerungsschaltung verknüpft ist, um den Steuerungsbefehl der Verlagerung des Tuchs (4) zu senden, und ein Empfänger mit den Betätigungsmitteln verknüpft ist, um den vom Sender (24) emittierten Befehls zu empfangen.

10. Steuerungsverfahren für eine Sicherheitsvorrichtung gegen die Auswirkungen des Windes einer Gelenkarm-Markise, die mindestens einen Träger, der eine Wickelachse trägt, eine Endstange, Arme, die den Träger und die Stange gelenkig verbinden, ein Tuch, das auf einer Seite an der Achse und auf der anderen Seite an der Stange befestigt ist, um sein Aufrollen um die Achse oder sein Abrollen von der Achse durch Betätigungsmittel zu ermöglichen, und Mittel zum Erkennen der Auswirkungen des Windes auf die Markise, die an der Endstange angeordnet sind, umfasst, wobei die Erkennungsmittel einen Sensor (15) und Verarbeitungsmittel (21, 22, 23, 25) umfassen, wobei das Verfahren folgende Schritte umfasst:
a) Erkennen einer Verlagerung der Stange;
b) Umwandeln der erkannten Verlagerung in ein Signal;
c) Einschalten der Stromversorgung der Erkennungsmittel anhand des Signals;
d) Vergleichen des Signals mit einem Sollwert;
e) Steuern des Hochziehens des Tuchs der Markise je nach dem Ergebnis des Vergleichs des Signals mit dem Sollwert;
wobei die Verarbeitungsmittel mindestens eine Weckschaltung (21), eine Schaltung (22) zum Aufbereiten des erkannten Signals, eine Analyse- und Steuerungsschaltung (23), die mit der Aufbereitungsschaltung (22) verbunden ist, und Stromversorgungsmittel (25) umfassen, wobei das erkannte Signal der Weckschaltung (21) und der Aufbereitungsschaltung (22) bereitgestellt wird.

11. Verfahren nach Anspruch 10, **dadurch gekennzeichnet, dass** das Signal und der Sollwert Intensitäts- und/oder Frequenzwerten entsprechen.

12. Verfahren nach einem der Ansprüche 10 oder 11, **dadurch gekennzeichnet, dass** die Stromversorgung der Erkennungsmittel nach der Steuerung des Hochziehens des Tuchs abgeschaltet wird.

13. Verfahren nach einem der Ansprüche 10 bis 12, **dadurch gekennzeichnet, dass** die Stromversorgung der Erkennungsmittel abgeschaltet wird, wenn während einer vorbestimmten Zeit keine Verlagerung erkannt wird.

## Claims

1. A device for detecting movement, that is due to wind, comprising a sensor (15) supplying a first signal at the time of detection and processing means (21, 22, 23, 25) for converting the first detected signal into a control signal, **characterized in that** the first signal supplied by the sensor (15) is used as a wake-up for the processing means (21, 22, 23, 25) and **in that** said processing means comprises at least a wake-up circuit (21), a circuit (22) for shaping the detected signal, an analysis and control circuit (23) connected to said shaping circuit (22) and power supply means (25), the detected signal being supplied to said circuit (21) and to said shaping circuit (22).

2. The device as claimed in claim 1, **characterized in that** the sensor (15) comprises an accelerometer capable of producing an electrical signal under the effect of vibrations.

3. The device as claimed in claim 2, **characterized in that** the sensor (15) is a piezo-electric sensor with a polymer membrane (16) held in a frame (17) and comprising an inertia weight (18).

4. The device as claimed in claim 2, **characterized in that** the sensor is an electromagnetic sensor with a magnetized core moving inside a solenoid.

5. The device as claimed in one of the preceding claims, **characterized in that** it comprises a timing device to cut off the power supply of the processing means after a specified time.

6. A safety device for protecting an awning with arms (1) from the effects of wind, said awning (1) comprising a support (2) carrying a rolling spindle (3), an end bar (5), arms (6, 7) connecting the support (2) and the bar (5) in an articulated manner, a sheet (4) fixed at one end to the spindle (3) and at the other end to the bar (5) in such a way as to allow its rolling up on the spindle (3) or its unrolling from the spindle (3) by actuating means and detection means (11) whose detected signal makes it possible to control a displacement of the sheet (4) via actuating means after comparison with a setting, **characterized in that** said detection means (11) are formed by a detection device according to one of the preceding claims.

7. The safety device as claimed in claim 6, **characterized in that** said detection means (11) are placed on the end bar (5) of the awning.

8. The safety device as claimed in claim 6 or 7, **characterized in that** the analysis and control circuit (23) comprises at least one converter and one logic processing unit (LPU, 28) comparing the detected signal with a setting and commanding the displacement of the sheet (4) according to the result of the comparison by transmitting a command to the actuating means.

9. The safety device as claimed in one of the preceding claims, **characterized in that** a transmitter (24) is associated with the analysis and control circuit in order to send the sheet (4) displacement command instruction, and a receiver is associated with the actuating means in order to receive the command transmitted by the transmitter (24).

10. A control method for a safety device for protecting an awning with arms from the effects of wind, said awning comprising at least one support carrying a rolling spindle, an end bar, arms connecting the support and the bar in an articulated manner, a sheet fixed at one end to the spindle and at the other end to the bar in such a way as to allow its rolling up on the spindle or its unrolling from the spindle by actuating means and means of detection of the effects of the wind on the awning placed on the end bar, the detection means comprising a sensor (15) and processing means (21, 22, 23, 25), the control method comprising the following steps:
a) a displacement of the bar is detected;
b) the detected displacement is converted into a signal;
c) the power supply of the detection means is brought into effect by means of said signal;
d) said signal is compared with a setting;
e) the retraction of the sheet of the awning is commanded according to the result of the comparison of said signal with the setting;
the detection means comprising at least one wake-up circuit (21), a circuit (22) for shaping the detected signal, an analysis and control circuit (23) connected to said shaping circuit (22) and power supply means (25), the detected signal being supplied to said circuit (21) and to said shaping circuit (22).

11. The method as claimed in claim 10, **characterized in that** said signal and said setting correspond to values of intensity and/or of frequency.

12. The method as claimed in claim 10 or 11, **characterized in that** the power supply of the detection means is cut off after the sheet retraction command.

13. The method as claimed in one of the claims 10 to 12, **characterized in that** the power supply of the detection means is cut off if no displacement is detected over a predetermined time.
